# EUROPEAN PATENT SPECIFICATION

(11) **EP 0 493 809 B1**
(45) Date of publication and mention of the grant of the patent: **11.03.1998**
(21) Application number: 91122301.4
(22) Date of filing: 27.12.1991
(51) Int. Cl.: B29C 63/00, B29C 70/76, B29C 67/00, B29C 33/44

(54) **A method of making a window glass with a synthetic resin frame**
Verfahren zur Herstellung von Fensterglas mit Kunststoffrahmen
Procédé de fabrication d'une vitre avec cadre en matière plastique

(30) Priority: 29.12.1990 JP 416740/90
(43) Date of publication of application: 08.07.1992
(73) Proprietor: ASAHI GLASS COMPANY LTD., Chiyoda-ku Tokyo 100 (JP)
(72) Inventor: Kuga, Kazuhiko, Yokohama-shi, Kanagawa-ken (JP); Yoshihara, Noriyuki, Yokohama-shi, Kanagawa-ken (JP); Takahashi, Kazuhiro, Yokohama-shi, Kanagawa-ken (JP)
(74) Representative: Wächtershäuser, Günter, Prof. Dr.

(56) References cited:
- EP-A- 0 368 669
- EP-A- 0 390 151
- FR-A- 2 194 560
- PATENT ABSTRACTS OF JAPAN vol. 12, no. 126 (M-687)19 April 1988 & JP-A-62 251 229 (TOKAI KOGYO KK) 2 November 1987
- PATENT ABSTRACTS OF JAPAN vol. 13, no. 234 (M-832)(3582) 30 May 1989 & JP-A-1 045 624 (ICHIKOH IND LTD) 20 February 1989

## Description

This invention relates to a method of making a window glass with a synthetic resin frame suitable for a window glass for a vehicle or a window glass for construction.

It is normally performed in a window glass for a vehicle or for construction, to fix a synthetic resin frame into a clearance between a glass plate and an opening for fitting the glass plate, to enhance its ornamental effect or sealing capacity.

JP-A-62 251 229 discloses a method for manufacturing a window glass with a synthetic resin frame. However, JP-A-62 251 229 does not disclose a method which involves pinching and press-contacting of the synthetic resin frame by a pinching jig.

Conventionally in the fixing of this synthetic resin frame, a method is performed wherein the synthetic resin frame which is preformed by extrusion, is adhered to a peripheral portion of the window glass by a sealant, or a molding made by extrusion or the like is pushed in the clearance after the glass plate is fitted to the opening. However, in these methods, automation of steps is difficult since considerable steps require manual labor, and the methods are not economical since number of the steps is large.

To solve these problems, a so-called encapsulation method is proposed wherein synthetic plastic or raw material thereof is injected into a cavity space in molds arranged with the glass plate thereby integrally forming the glass plate with the synthetic resin frame, as shown in Japanese Unexamined Patent Publication Nos. 158481/1982 and 73681/1983. However this method is not satisfactory since cracking of the glass plate is liable to take place when the glass plate is disposed in the molds and the molds are closed, or when the forming is performed by injecting resin in the molds, due to a warp of the glass plate or insufficient accuracy in a bending-working thereof.

This invention proposes a method of a window glass with a synthetic resin frame to solve shortcomings wherein long time is required for the adherence, manual labor is required for the finishing, the dimensional accuracy is poor, and the appearance is not satisfactory, of the conventional method wherein the synthetic resin frame which is preformed by extrusion or by injection molding, is fixed and adhered to the surrounding of the glass plate.

Furthermore, this invention proposes a method of making a window glass with a synthetic resin frame wherein the advantage of the above-mentioned encapsulation method is utilized in which the forming of the frame having a partially different sectional shape can be produced, and the shortcoming thereof is prevented in which the glass plate is liable to crack in performing the method.

In the conventional post-fixing method, as the sealant for the glass plate and the synthetic resin frame, a moisture hardening type urethane series sealant, or a dual liquid reaction hardening type urethane series sealant which has high adhesive strength thereof with a glass plate, is generally used. This sealant is normally injected into a groove of the synthetic resin frame which constitutes an adhering surface thereof with the glass plate. Since this sealant is a highly viscous sol-like liquid, it is quite difficult to uniformly and thinly coat it. Accordingly, since excessive adhesive agent flows out outside of a portion for coating, when the synthetic resin frame is press-contacted to the surface of the glass plate, it is indispensable to cut off manually the flown out portion, or irregularities are caused on the surface of the resin frame due to non-uniformity of the coating thickness of the adhesive agent, thereby generating defects such as bad appearance.

Moreover as for a shape of the groove of the synthetic resin frame fixed with the glass plate, design of a special shape is necessary wherein a space is provided for a reservoir for the adhesive agent, or spacing of the top end portion of the groove is narrowed down compared with the other portions, and the forming thereof is difficult.

Furthermore, since the time required for hardening the adhesive agent is very long; several hours to a whole day, many jigs for press-contacting the synthetic resin frame to the glass plate are required, and many jigs and much space for preserving the window glass plate until the harding is finished, are required, which necessitates high production cost.

In the above encapsulation method, the glass plate is put in rigid molds made of metal or the like, and synthetic resin or raw material thereof is injected into a cavity space constituted of the peripheral portion of the glass plate and the inner surface of the molds. Therefore, although this method has an advantage wherein manual labor in the forming is reduced and the dimensional accuracy of the product is high, it has a severe problem wherein the glass plate is very easily cracked when the molds are tightened, or when the injection forming is performed, due to a warp of the glass plate or insufficient accuracy in bending-working of the glass plate. To prevent the cracking in the mold tightening, an elastic body is disposed at the contact surface for the mold and the glass plate, or molds are devised to press the glass plate by a spring or the like under constant pressure. However these measures do not solve the problem of the cracking of the glass plate completely.

In the injection molding, there are many cases in which polyvinyl chloride is utilized as a forming material. In this case the cracking of the glass plate is caused even in the forming thereof due to forming pressure of 100 kg/cm² or more and elevated temperature of about 200°C. When the cracking of the glass plate is generated, considerable time is required for removing the fragments, and the cost is increased considerably by the loss of expensive glass plates or by flaws on the surface of the molds.

It is an object of the present invention to solve the above problems.

According to an aspect of the present invention, there is provided a method of making a window glass with a synthetic resin frame, in which a preformed synthetic resin frame is fixed and adhered to a peripheral portion of the window glass thereby integrating the synthetic resin frame with the window glass comprising steps of forming the synthetic resin frame with an adhesive agent wherein the adhesive agent is coated on a surface portion thereof for adhering the synthetic resin frame to the window glass in forming of the synthetic resin frame; fixing the synthetic resin frame to the peripheral portion of the window glass; and pinching, press-contacting and heating at least a fixing portion of the synthetic resin frame for fixing the synthetic resin frame to the window glass by a pinching jig, thereby integrally adhering the synthetic resin frame to the window glass by the adhesive agent.

According to another aspect of the invention, there is provided a method of making a glass window with a synthetic resin frame, in which a preformed synthetic resin frame is fixed and adhered to a peripheral portion of the window glass thereby integrating the synthetic resin frame with the window glass, wherein a preformed synthetic resin frame is fixed to a peripheral portion of the window glass coated with a silane coupling agent and successively a solution-type adhesive agent, or directly the solution-type adhesive agent containing the silane coupling agent; and the synthetic resin frame is adhered to the glass plate by heating the synthetic resin frame while the synthetic resin frame closely contacts the window glass, or by closely contacting the synthetic resin frame to the window glass instantly after the synthetic resin frame is heated.

A more complete appreciation of the invention and many of the attendant advantages thereof will be readily obtained as the same becomes better understood by reference to the following detailed description when considered in connection with the accompanying drawings, wherein:

In the drawings:
Figure 1 is a horizontal sectional diagram showing an example of the synthetic resin frame which is applied to the present invention;
Figure 2 is a horizontal sectional diagram showing major portions of a window glass with a synthetic resin frame which is produced by the present invention;
Figure 3 is an outline horizontal sectional diagram of a mold portion for showing a method of a glass window with a synthetic resin frame of the present invention;
Figure 4 is an outline horizontal sectional diagram of a mold portion for showing a method of making a window glass with a synthetic resin frame of the present invention;
Figure 5 is an outline horizontal sectional diagram of a mold portion for showing a method of making a window glass with a synthetic resin frame of the present invention;
Figure 6 is an outline horizontal sectional diagram of a mold portion for showing a method of making a window glass with a synthetic resin frame of the present invention;
Figure 7 is an outline plan of a devise for making a window glass with a synthetic resin frame using a pinching jig of the present invention;
Figure 8 is a partially sectional diagram taken along the line A-A of Figure 7;

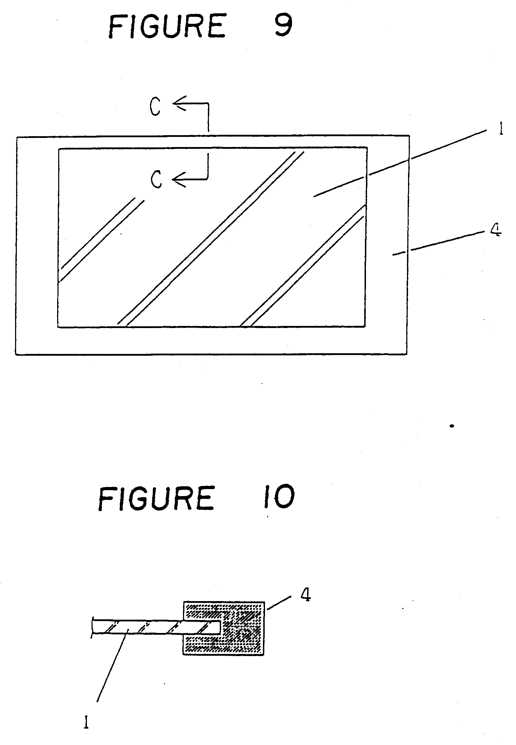

Figure 9 is an outline plan of a window glass with a synthetic resin frame which is produced by the present invention; and
Figure 10 is a partially sectional diagram taken along the line C-C of Figure 9.

In this invention, although both thermoplastic resin and thermosetting resin can be utilized as synthetic resin for composing the frame, the synthetic resin is especially desirable to be composed of an elastomer or a soft synthetic resin. As these resins, soft polyvinyl chloride resin, ethylene/vinyl acetate resin, polyurethane resin, polyisoprene resin, polybutadiene resin, styrene/butadiene gum, EPDM gum, and the like are exemplified. However this invention is not restricted by these materials.

In this invention, the following method is proposed as a method to preform the synthetic resin frame. A dummy plate is provided which has the same shape with that of the glass plate to be provided with the synthetic resin frame at least in the outline and the shape of the peripheral portion of the glass plate. This dummy plate is desirable to be composed of material such as stainless steel or aluminum which is easy to form and stands repeated usage. It is desirable to coat a mold-removing-agent beforehand on the dummy plate at least on a surface thereof which contacts the material of the synthetic resin frame.

This dummy plate is disposed between a male mold and a female mold which compose a cavity space of a required shape of the forming. Synthetic resin for forming the synthetic resin frame, or raw material thereof is injected through a gate of the molds into a cavity space formed by tightening up these male and female molds, and is solidified thereby forming the synthetic resin frame.

The method of forming the synthetic resin frame is not restricted to the above injection forming method, or RIM (reaction injection molding) forming method or the like, and various forming methods such as extrusion forming method or blow-molding method can be adopted. The forming method can pertinently be selected according to synthetic resin material for use, or kind of raw material thereof or shape of the frame.

When the extrusion is adopted, the sectionally shape of the synthetic resin frame is uniform. When the injection molding method or the RIM forming method or the like is adopted, it is possible to form a synthetic resin frame having a sectional shape which varies in the peripheral direction of the glass plate by designing the shape of the cavity space provided in the molds.

After the synthetic resin frame is formed at the peripheral portion of the dummy plate, the forming molds are opened, the dummy plate attached with the synthetic resin frame is taken out, and the synthetic resin frame is separated from the dummy plate. In this way the synthetic resin frame which is preformed to a required shape, is provided. No special consideration is required for designing the shape of the groove itself provided in the synthetic resin frame for fixing the glass plate, and the shape is simply the same with that of the glass plate in the thickness and in the engaging length.

Furthermore, a resin having high mold-removability such as fluorine resin or the like, is coated on the peripheral portion of the dummy plate 1 thereby promoting the mold-removability. Next, a solution type adhesive agent is coated on the peripheral portion of the dummy plate or on a portion of molds corresponding with the glass plate by a width a little broader than that of the adhering surface, before the forming, the solvent is evaporated at room temperature or by heating it in an oven, if necessary, the dummy plate 1 is put into the forming molds, the molds are tightened, and the resin is injected into a cavity portion in the molds. After the resin solidifies, the resin frame which is formed at the peripheral portion of the dummy plate 1 which is taken out of the molds by opening them, is taken out, thereby obtaining the resin frame with an adhesive agent wherein the adhesive agent is transcribed to the resin side.

As an adhesive agent which is applied on the portion of the frame which is an adhering surface thereof with the glass plate, in forming of the synthetic resin frame, a solution type adhesive agent is desirably utilized wherein a synthetic resin having adhesion function for between the glass plate and the synthetic resin frame, is dissolved in a solvent. As a type of hardening of the adhesive agent, both of a type wherein the adhesive agent hardens by moisture in the air, and a type wherein the adhesive agent is composed by mixing two or more solutions of a main agent, a hardening agent, a catalyst, an additive agent, and the like before the coating and reaction-hardens, can be utilized.

It is especially desirable to perform a pretreatment wherein a silane coupling agent is coated on a surface for coating of the glass plate before coating the adhesive agent, or to mix the silane coupling agent in the solution of the adhesive agent, to enhance adhesion strength between the synthetic resin frame and the glass plate.

As the silane coupling agent, a single one or a mixture of amino-type-silane, epoxy-type-silane, mercapto-type-silane, methacrylo-type-silane, acrylic-type-silane, isocyanate-type-silane and the like, can be utilized. It is especially desirable to use a single one or a mixture of amino-type-silane, epoxy-type-silane, mercapto-type-silane and isocyanate-type-silane, since the glass plate and the synthetic resin frame can be adhered with high adhesion strength and at the same time good adhesion durability is obtained.

When a pretreatment is performed wherein these silane coupling agents are coated on the surface for coating of the glass plate, it is desirable for accelerating hydrolysis reaction to use the agents by diluting in a solvent which contains at least 0.1 wt% or more of water, as in a water/alcohol tpye solvent. A range of 0.1 to 10 wt% is desirable as the concentration of the silane coupling agent in the solution. The range of 0.03 to 5 wt% is especially desirable since the high adhesion strength and the high adhesive durability between the frame and the glass plate are obtained. It is necessary to sufficiently evaporate the solvent by aeration or by heating after the silane coupling agent solution is coated and before the adhesive agent is coated.

When the silane coupling agent is mixed in the solution of the adhesive agent, a range of 0.1 to 10 wt% is desirable with respect to resin component in the solution of the adhesive agent as the concentration of the silane coupling agent, and the range of 0.3 to 5 wt% is especially desirable since the high adhesion strength and the high adhesion durability between the frame and the glass plate are obtained.

As kinds of the solution type adhesive agents which are applicable to a portion of the frame for adhering to the glass plate, or to a peripheral portion of the glass plate (mentioned later), in forming of the frame at the occasion mentioned above, adhesive agents of urethane series, acylic series, polyester series, polyamide series, and the like, can be utilized. Among these, the urethane series adhesive agents is desirable for the high adhesion strength and the high adhesion durability.

This invention has a characteristic wherein the adhesive agent is not coated on the groove of the synthetic resin frame, but is coated on the surface of the glass plate. Since the adhesive agent is of a solution type, it is easy to coat the adhesive agent thinly and uniformly on the surface for coating of the peripheral portion of the glass plate by a felt-like cloth or a brush or a spray. Since the groove of the synthetic resin frame for fixing the glass plate is very narrow and the synthetic resin frame is of a very thin shape, the frame easily deforms by its own weight. Therefore automatic coating of the adhesive agent is difficult and the coating requires manual labor. However when the adhesive agent is coated on the glass plate having high regidity, the automatic coating by a robot is easy which saves manual labor.

The synthetic resin frame is tacked to the peripheral portion of the glass plate by fixing the glass plate to the groove, after the adhesive agent is coated and the solvent is evaporated by aeration or by heating. As a finishing step, the tacked assembly is placed on a lower mold, the position of the lower mold engraved with the outer surface shape of the synthetic resin frame, and that of the synthetic resin frame tacked to the glass plate are matched, the molds are tightened, the assembly is heated in the molds, and press-contacted, thereby obtaining high dimensional accuracy which is not influenced by the dimensional accuracy of the glass plate.

The structure of the molds used in the finishing step of the present invention, is desirable to have an elastic structure at the portion thereof which presses the synthetic resin frame, for preventing the glass plate cracking and at the same time enhancing the adhesion of the synthetic resin frame to the glass plate, even when the glass plate has a dimensional deviation due to a warp of the glass plate or working error in the bending-operation thereof or the like.

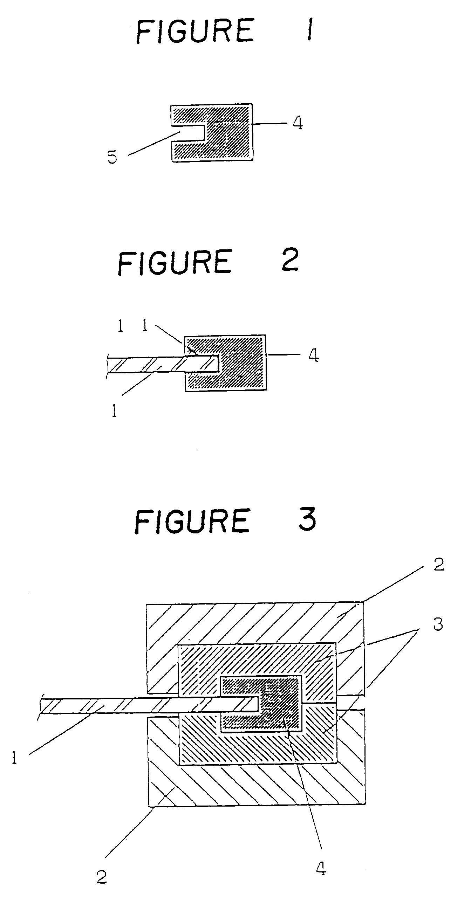

Figure 1 shows an example of the synthetic resin frame which is applied to the present invention, and Figure 2 is a sectional diagram of major portions of a window glass with a synthetic resin frame produced by the present invention. In these Figures, a reference numeral 1 designates a glass plate, 4, a synthetic resin frame fixed in the peripheral portion of the glass, 5, a groove of the frame, and 11, an adhesive agent layer.

Figures 3 to 6 show partially sectional diagrams of examples of molds having elastic structures which are utilized for enhancing adhesiveness of the synthetic frame to the peripheral portion of the glass plate in the finishing step, after the synthetic resin frame is fixed to the peripheral portion of the glass plate interposing an adhesive agent layer.

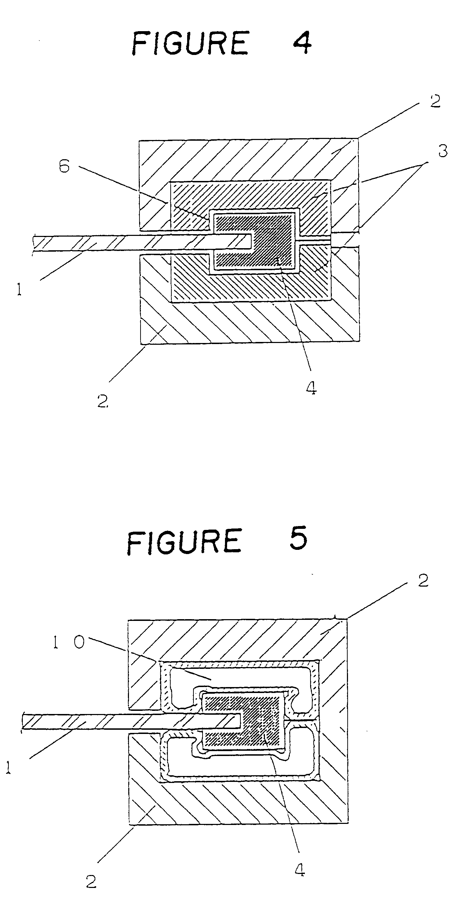

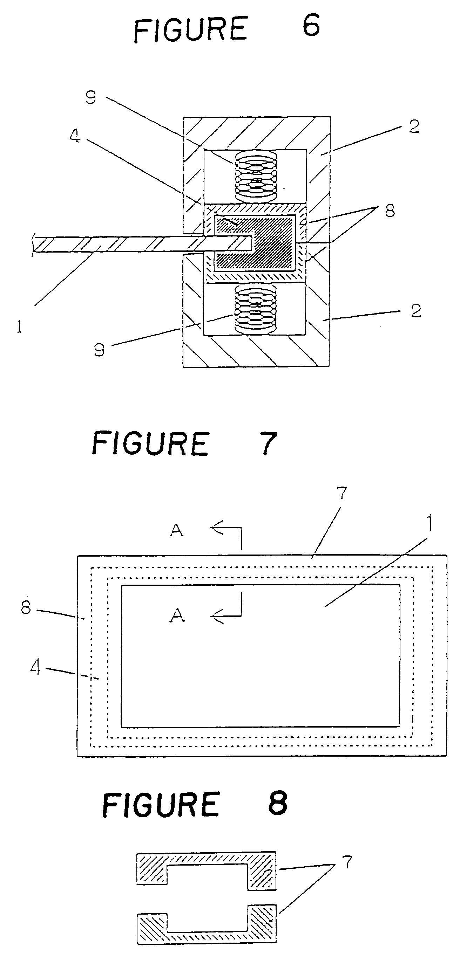

Figure 3 shows an example of the molds wherein an elastic body 3 is interposed between the molds and the synthetic resin frame 4 and the glass plate 1. Figure 4 shows an example of the molds wherein a very thin surface layer 6 made of metal or hard plastics between the mold and the synthetic resin frame 4 and the glass plate 1, and the outer surface of the surface layer 6 is supported by the elastic body 3. Figure 5 shows an example of the molds wherein a hollow elastic body 10 is interposed between the molds and the synthetic resin frame 4 and the glass plate 1, and the synthetic resin frame 4 and the glass plate 1 is pressurized by fluid pressure in the hollow portion of the elastic body. Figure 6 shows an example of a pressing device wherein the synthetic resin frame 4 is pressed to the glass plate 1 by a spring 9 interposing a flexible mold 8 made of metal or hard plastics.

In Figures 3 to 6, metal such as aluminum, iron, stainless steel, and the like, or hard plastics, or reinforced hard plastics can pertinently be utilized for a frame 2 which holds these elastic structures.

Furthermore, it is possible to utilize a couple of pinching jigs of a simplified type which are engraved with the outer surface shape of the synthetic resin frame 4, shown in Figures 7 and 8, instead of the above molds. The outer surface shape of the synthetic resin frame is engraved on the pair of a picture-frame-like pinching jig 7. It is possible to provide the pinching jig with pertinent rigidity by suitably designing material as for material hardness and thickness thereof. These jigs have a flexible property wherein, even when there is a deviation or the like on the glass plate due to the warp or the working error, the jigs follow the deviation since the jigs can be flexed.

In using the pair of the pinching jigs, the synthetic resin frame is fixed and tacked to the peripheral portion of the glass plate, the glass plate 1 is placed on one of the pair of the pinching jigs 7, and the positioning of the synthetic resin frame is performed in the same method as in utilizing the molds as above. Next the other one of the pair of the pinching jigs 7 is placed on top of the assembly of the glass plate 1 with the synthetic resin frame 4 and one of the pair of the pinching jigs 7, by which the glass plate 1 is pinched, the whole assembly is put in a bag-like sheet, and the inside of the sheet is decompressed, by which the synthetic frame closely contacts the surface of the glass plate by pressing them through the jigs.

To adhere the synthetic resin frame 4 to the glass plate 1, the assembly of the synthetic resin frame 4 and the glass plate 1 is heated while being held in the molds, by which the adhesive agent is activated, cooled and taken out of the molds. As a method of heating and cooling, a method wherein circulation pipes of fluid media pass through the molds, and a high temperature media and a low temperature media are switched, or a method wherein the molds are put into an oven, heated, taken out of the oven and air-cooled by a fan or by a blower, or a method wherein a sheet-like heater is pressed on the surface of the glass plate, the assembly is heated and air-cooled, can be utilized.

Furthermore, instead of the bag-like sheet, two sheets with their peripheral portions sealed, can be utilized. After the assembly is heated by a method wherein the assembly is put in an oven while the decompression is kept, the assembly is cooled, and the product is taken out. Or instead of decompressing the inside of the sheets, a method can be utilized wherein the sheets are in a compressing chamber, the compression is performed on outside of the sheets, and at the same time heating is performed. In this way adhesive force between the glass plate 1 and the synthetic resin frame 4 can be enhanced.

It is possible to adopt a method wherein the above steps of compressing and heating are switched. When the molds are utilized, it is possible to heat the glass plate tacked with the synthetic resin frame, and instantly after the step, the synthetic resin frame closely contacts the glass plate by the mold tightening, and at the same time the synthetic resin frame is cooled. When the pinching jigs are utilized, it is possible to utilized a method wherein just after the heating the inside of the bag-like sheet is decompressed or the outside thereof is pressurized, by which the synthetic resin frame closely contacts the glass plate and at the same time the cooling is performed.

A method of making a window with a synthetic resin frame is proposed, wherein a synthetic resin frame formed separately is fixed to a peripheral portion of the window glass coated with a solution type adhesive agent, and the adhesive agent is directly heated by microwave heating while the frame is contacting surface of the window glass, thereby adhering the frame to the window by performing activation of the adhesive agent and hardening acceleration thereof in a very short time.

In case of the microwave heating, since heat generation of a heated substance (dielectric substance) is proportional to the dielectric loss constant (a product of specific dielectric constant by power factor of a dielectric body) thereof, a substance having large dielectric constant can easily be heated in a short time. Accordingly, in a construction wherein the frame is fixed to the peripheral portion of the window glass, the mechanism of heating the adhesive agent by the microwave heating, depends on kinds of the utilized synthetic resin, adhesive agent and window glass, that is, on the dielectric loss constants thereof.

When the dielectric loss constant of at least one of the adhesive agent and the window glass is larger than the dielectric constant of the frame, the adhesive agent is heated directly by microwave or by heat conduction from the heated window glass or by combination of both. Accordingly, this method is the most preferable for the reason wherein temperature of the frame is kept low and deformation or deterioration of the frame is prevented.

Furthermore, when the dielectric constant of the frame is about the same with or a little more than the dielectric loss constant of the adhesive agent or the window glass, the adhesive agent is directly heated by microwave, or by heat-conducted by the heating of the frame and the window glass. In this case the process is not so preferable since the temperature of the frame is elevated. However, it is practically enforciable in a case wherein the hardening temperature or the temperature of activation of the adhesive agent is sufficiently low compared with temperature of thermal deformation of the frame.

Concerning frequency of the microwave in this invention, a range of 500 to 10,000 MHz is preferable, and a range of 800 to 5,000 MHz is particularly preferable. When the frequency is under the above values, the transformation efficiency from electric wave to heat is worsened. When the frequency is above the values, the interiors of these substances are hard to be heated causing non uniformity of temperature distribution thereof. Therefore both cases are not preferable.

According to the present invention, by using a solution type adhesive agent and not a sealant, it is possible to uniformly and thinly coat the adhesive agent on the contact surface for the groove of the synthetic resin frame for fixing the glass plate and the glass plate. Therefore, there is no flow-out in the adhering in contrast to the case of the sealant, and the manual post-finishing is not necessary. Furthermore, irregularities on the surface of the synthetic resin frame due to the non-uniformly of the coating thickness of the adhesive agent is reduced and the appearance is improved. Furthermore, it is possible to coat the adhesive agent on the glass plate, and man power saving by automation can be realized. Since the adhesion can be performed in a short time, the facility and the reserving area can be reduced and the cost reduction is made possible.

Furthermore, it is possible to produce a window glass with a synthetic resin frame having high dimensional accuracy, by positioning the synthetic resin frame by molds or by pinching jigs of a simplified type, and by pressing the synthetic resin frame. Since the molds have elastic structures, or due to the flexible characteristic in case of the jigs, it is possible to prevent the glass plate cracking even when the glass plate has a deviation caused by the warp thereof and the working error in bending-operation thereof and at the same time to enhance in adhesiveness of the synthetic resin frame to the glass plate.

### Example 1

First, the synthetic resin frame 4 of a required shape is formed by injection molding at a peripheral portion of a dummy plate utilizing a thermoplastic soft polyvinyl chloride, and the formed synthetic resin frame is taken out from the peripheral portion of the dummy plate.

A silane coupling agent solution composed of amino-series-silane/ethanol/water (3 parts/75 parts/22 parts) is coated by a brush on a surface for adhering the synthetic resin frame to the peripheral portion of the glass plate 1 having thickness of 4mm, aeration is performed, a solution type urethane-series adhesive agent is coated by a felt-cloth impregnated with the adhesive agent by thickness of about 20 µm, and the glass plate is heated in an oven at 60°C for 5 minutes by which the solvent is evaporated. Next, the synthetic resin frame is tacked to the peripheral portion of the glass plate by fixing the end portion of the glass plate to the groove for fixing the glass plate to the preformed synthetic resin frame along the peripheral portion of the glass plate.

The assembly is put into elastic molds disposed with a gummy elastic body of the structure shown in Figure 3, the molds are tightened, the assembly is heated in an oven at 120°C for 10 minutes, and taken out, air-cooled down to 35°C, the molds are opened, and the product is taken out. There is no flow-out of the adhesive agent on the obtained window glass with a synthetic resin frame, the appearance thereof is good, and a high dimensional accuracy is shown in fixing the synthetic resin frame to the glass plate. Furthermore, it has high adhesion strength, sufficient for practical use.

### Example 2

First, the synthetic resin frame 4 made of polyurethane of a required shape is formed by reaction injection molding at the peripheral portion of the dummy plate, and the formed synthetic resin frame is taken out from the peripheral portion of the dummy plate.

A solution type urethane series adhesive agent added with an epoxy-series silane coupling agent by 1 wt% with respect to the plastic portion of the adhesive agent is coated on the surface for adhering the synthetic resin frame, of the peripheral portion of the glass plate having thickness of 3.5 mm, by thickness of about 15 µm and the assembly is heated in an oven at 50°C for 5 minutes by which the solvent is evaporated. Next, the synthetic resin frame is tacked to the glass plate by fixing the end portion of the glass plate to the groove for fixing the glass plate of the synthetic resin frame along the peripheral portion of the glass plate.

The assembly is pinched by the pinching jigs of the structure shown in Figures 7 and 8, put in a bag-like gummy sheet made of Neoplane, and the inside of the sheet is decompressed down to 200 torr by a vacuum pump. The sheet is heated in an oven at 50°C for 10 minutes while the decompression is being kept, and the sheet is taken out of the oven, air-cooled to room temperature by a fan, the sheets and the jigs are opened and product is taken out. The obtained window glass with a synthetic resin frame is good in the appearance, in the dimensional accuracy and in the adhesion strength.

### Example 3

A dummy plate is formed having the same shape with that of the window glass the peripheral portion of which is coated with a fluorine resin, and after urethane series solution type adhesive agent is coated at its peripheral portion, the dummy plate is heated for 5 minutes in an oven at 60°C, thereby evaporating the solvent. This dummy plate is put into forming molds, the molds are tightened, a soft polyvinyl chloride resin is injection-molded in a cavity portion of the molds. After the resin is cooled and solidified in the molds, the molds are opened, the dummy plate with the resin frame is taken out, and the resin frame is taken off the dummy plate, thereby obtaining the resin frame wherein the adhesive agent is transcribed to the adhering portion.

On the other hand, a silane coupling agent solution composed of amino series silane/ethanol/water (3 parts/75 parts/22 parts) is painted on a adhering surface for adhering the resin frame, of the peripheral portion of the glass plate 1, by a brush and aerated. Next, the resin frame is tacked to the window glass by fixing the peripheral portion of the glass plate to a groove of the resin frame. The assembly is put into a simplified elastic molds disposed with the gummy elastic body having the structure shown in Figure 2, the molds are tightened, the assembly is heated for 10 minutes in an oven at 120°C, taken out therefrom, air-cooled down to 35°C by a fan, the simplified molds are opened and the product is taken out. The obtained window glass with the frame has no flow-out of the adhesive agent, the appearance is good, and shows high dimensional accuracy in fixing the resin frame to the window glass. Furthermore it has high adhesion strength sufficient for practical use.

### Example 4

Forming molds are formed engraved with shape of the peripheral portion of a window glass, on which a fluorine resin is coated. A solution type urethane series adhesive agent added with an epoxy series silane coupling agent by 1 wt% with respect to the plastic portion of the adhesive agent, is coated on a portion of this mold corresponding with the peripheral portion of the window glass, the molds are tightened after evaporation of the solvent, and a polyurethane resin frame is formed by reaction injection molding. After the resin reacted and solidified, the molds are opened and the resin frame is taken out, thereby obtaining the resin frame transcribed with the adhesive agent at its adhering portion.

The resin frame is tacked to the glass plate by fixing the peripheral portion of the window glass to a groove of the resin frame, the assembly is pinched by a pinching jig having the structure shown in Figures 7 and 8, put in a bag-like neoprene gummy sheet, and the inside thereof is decompressed down to 200 Torr by a vacuum pump. The assembly is heated for 10 minutes in an oven at 100°C while maintaining the decompression, taken out therefrom, air-cooled down to room temperature by a fan, the sheet and the jig are opened, and the product is taken out. The obtained window glass with a resin frame is good in the appearance, the dimensional accuracy and the adhesion strength.

### Example 5

First, the synthetic resin frame 4 is formed by injection molding utilizing a soft polyvinyl chloride by a method similar to Example 1.

A silane coupling agent solution composed of amino-type silane/ethanol/water (1 part/75 parts/24 parts) is coated on surface for adhering the frame, of the peripheral portion of the glass plate 1 having 4 mm thickness by a brush, aerated, on which a solution type urethane series adhesive agent is further coated by thickness of about 30 µm by a method wherein the adhesive agent is impregnated in a felt cloth, and the frame is heated for 3 minutes in an oven at 100°C thereby evaporating the solvent. Next, the frame is tacked to the glass plate by fixing the edge portion of the window glass to a groove of the frame. The assembly is pinched by a simplified jig disposed with a gummy elastic body having the structure shown in Figure 2, put in an oven-type microwave heating device, heated for 75 seconds, taken out therefrom, cooled down to room temperature by flowing cooling water in a cooling pipe, and the product is taken out.

The obtained window glass with a frame has no flow-out, the appearance is good, and it has high dimensional accuracy in fixing the frame to the window glass. Furthermore it has high adhesion strength sufficient for practical use.

### Example 6

First, a polyurethane resin frame is formed by the reaction injection molding. The shape of the frame is the same with that in Example 1 except that the width of a groove for fixing the window glass, is 3.5 mm.

On the other hand, a silane coupling agent solution composed of epoxy-type-silane/ethanol/water (1 part/75 parts/24 parts) on surface for adhering the frame of the peripheral portion of the glass plate having 3.5 mm thickness by a brush, and aerated, on which a solution type urethane series adhesive agent is coated by thickness of about 15 µm by a method wherein the adhesive agent is impregnated in a felt cloth, and the frame is heated for 5 minutes in an oven at 80°C thereby evaporating the solvent. Next, the frame is tacked to the glass plate by fixing the edge portion of the window glass to a groove of the frame. The assembly is pinched by a simplified jig disposed with a gummy elastic body having a structure shown in Figure 2, heated for 60 seconds in an oven-type microwave heating device, taken out therefrom, cooled down to room temperature by circulating cooling water, and the product is taken out. The window glass with the synthetic resin frame obtained by this method, is good in the appearance, the dimensional accuracy and the adhesion strength.

In this invention, the product is considerably improved since the glass cracking rarely takes place even when the glass plate having a dimensional deviation in the accuracy of the bending-working, is utilized. Since the synthetic resin frame is separately preformed, the design of the sectional shape of the groove of the synthetic resin frame is easy. The adhering time of the synthetic resin frame on the glass plate is considerably shortened and the facility and the reserving area of the products can be reduced. Since the automation of the facility is possible and burr finishing of the adhesive agent by manual labor is not necessary, considerable man power saving can be realized and at the same time the appearance of the product is improved. Furthermore, the window glass with the synthetic resin frame having high dimensional accuracy can be obtained without being influenced by the dimensional accuracy of the glass plate.

## Claims

1. A method of making a window glass with a synthetic resin frame, in which a preformed synthetic resin frame (4) is fixed and adhered to a peripheral portion of the window glass (1), thereby integrating the synthetic resin frame with the window glass, comprising steps of:
forming the synthetic resin frame (4) with an adhesive agent (11) wherein the adhesive agent is coated on a surface portion thereof for adhering the synthetic resin frame to the window glass (1) in forming of the synthetic resin frame;
fixing the synthetic resin frame (4) to the peripheral portion of the window glass (1); and
heating the assembly of resin frame and window glass in a mold, thereby integrally adhering the synthetic resin frame (4) to the window glass (1) by the adhesive agent (11),
characterized in that the mold is a pinching jig (7) for pinching, press-contacting and heating at least a fixing portion of said synthetic resin frame of said assembly.

2. A method of making a window glass with a synthetic resin frame, in which a preformed synthetic resin frame (4) is fixed and adhered to a peripheral portion of the window glass (1), thereby integrating the synthetic resin frame with the window glass comprising steps of:
coating an adhesive agent (11) on a surface portion of the window glass (1) for adhering the synthetic resin frame (4) to the window glass (1);
fixing the synthetic resin frame (4) to the peripheral portion of the window glass (1); and
heating the assembly of resin frame and window glass in a mold, thereby integrally adhering the synthetic resin frame (4) to the window glass (1) by the adhesive agent (11),
characterized in that the mold is a pinching jig (7) for pinching, press-contacting and heating at least a fixing portion of said synthetic resin frame of said assembly.

3. The method of making a window glass (1) with a synthetic resin frame according to Claim 1, wherein a dummy plate having the same shape with the window glass (1) to which the synthetic resin frame (4) is fixed at least at a peripheral portion of the dummy plate, is disposed in molds; a synthetic resin or a raw material thereof for forming the synthetic resin frame, is injection-molded; the dummy plate and the formed synthetic resin frame are taken out of the molds after the synthetic resin or the raw material thereof solidifies; and the formed synthetic resin frame (4) is taken out of the dummy plate.

4. The method of making a window glass with a synthetic resin frame according to Claim 1, wherein the method for forming the synthetic resin frame is injection molding; and the synthetic resin frame with an adhesive agent is formed by coating beforehand the adhesive agent on a first surface of molds or a dummy plate corresponding to a second surface of the synthetic resin frame for adhering the synthetic resin frame to the window glass in forming of the synthetic resin frame.

5. The method of making a window glass with a synthetic resin frame according to Claim 1 or Claim 2, wherein the method for forming the synthetic resin frame is extrusion; and the synthetic resin frame with an adhesive agent is formed by continuously coating the adhesive agent on a portion of with the synthetic resin frame for adhering the synthetic resin frame to the window glass after the synthetic resin frame is extruded from a die into a certain fixed shape, and air-cooled or water-cooled.

6. The method of making a window glass with a synthetic resin frame according to Claim 1 or Claim 2, wherein the adhesive agent (11) is a solution-type urethane series adhesive agent.

7. The method of making a window glass with a synthetic resin frame according to Claim 1, wherein a peripheral portion of the glass plate coated with a silane coupling agent and successively a solution-type adhesive agent, or directly the solution-type adhesive agent contacting the silane coupling agent, is fixed to a groove portion of a preformed synthetic resin frame (4) for fixing the synthetic resin frame to the window glass (1), and the synthetic resin frame is adhered to the window glass by heating the synthetic resin frame while the synthetic resin frame closely contacts the window glass, or by closely contacting the synthetic resin frame to the window glass instantly after the synthetic resin frame is heated.

8. The method of making a window glass with a synthetic resin frame according to Claim 1, wherein after a synthetic resin frame (4) formed separately is fixed to a periphery of the window glass (1) coated with a solution type adhesive agent, adhering of the synthetic resin frame to the window glass is performed by heating the solution-type adhesive agent by microwave heating thereby activating the adhesive agent and accelerating hardening thereof.

## Patentansprüche

1. Verfahren zum Herstellen eines Fensterglases mit einem Kunststoffrahmen, in dem ein vorgefertigter Kunststoffrahmen (4) an einem peripheren Abschnitt des Fensterglases (1) befestigt und geklebt wird, wodurch der Kunststoffrahmen mit dem Fensterglas einstückig verbunden wird, das die Schritte aufweist:
Gießen des Kunststoffrahmens (4) mit einem Klebemittel (11), worin das Klebemittel auf einem Oberflächenabschnitt zum Kleben des Kunststoffrahmens an das Fensterglas (1) beim Gießen des Kunststoffrahmens aufgebracht wird;
Fixieren des Kunststoffrahmens (4) an dem peripheren Abschnitt des Fensterglases (1); und
Heizen der Einheit bestehend aus dem Kunststoffrahmen und dem Fensterglas in einer Form, wodurch einstückig der Kunststoffrahmen (4) an das Fensterglas (1) durch das Klebemittel (11) geklebt wird,
dadurch gekennzeichnet, daß die Form eine Klemmvorrichtung (7) zum Klemmen, Preßkontaktieren und Heizen von mindestens einem Fixierabschnitt des Kunststoffrahmens der Einheit ist.

2. Verfahren zum Herstellen eines Fensterglases mit einem Kunststoffrahmen, in dem ein vorgefertigter Kunststoffrahmen (4) an einem peripheren Abschnitt des Fensterglases (1) befestigt und geklebt wird, wodurch der Kunststoffrahmen mit dem Fensterglas einstückig gebildet wird, das die Schritte aufweist:
Aufbringen eines Klebemittels (11) auf einen Oberflächenabschnitt des Fensterglases (1) zum Kleben des Kunststoffrahmens (4) an das Fensterglas (1);
Fixieren des Kunststoffrahmens (4) an dem peripheren Abschnitt des Fensterglases (1); und
Heizen der Einheit bestehend aus dem Kunststoffrahmen und dem Fensterglas in einer Form, wodurch einstückig der Kunststoffrahmen (4) an das Fensterglas (1) durch das Klebemittel (11) geklebt wird,
dadurch gekennzeichnet, daß die Form eine Klemmvorrichtung (7) zum Klemmen, Preßkontaktieren und Heizen von mindestens einem Fixierabschnitt des Kunststoffrahmens der Einheit ist.

3. Verfahren zum Herstellen eines Fensterglases (1) mit einem Kunststoffrahmen nach Anspruch 1, in dem eine Blindplatte, die die gleiche Form wie das Fensterglas (1) hat, an der der Kunststoffrahmen (4) zumindest an einem peripheren Abschnitt der Blindplatte befestigt ist, in den Formen angeordnet ist; ein Kunstharz oder ein Grundmaterial davon zum Gießen des Kunststoffrahmens spritzgegossen wird; die Blindplatte und der gebildete Kunststoffrahmen aus den Formen entnommen werden, nachdem das Kunstharz oder dessen Grundmaterial sich verfestigt hat; und der gebildete Kunststoffrahmen (4) von der Blindplatte abgenommen wird .

4. Verfahren zum Herstellen eines Fensterglases mit einem Kunststoffrahmen nach Anspruch 1, in dem das Verfahren zum Ausbilden des Kunststoffrahmens ein Spritzgießen ist; und der Kunststoffrahmen mit einem Klebemittel gebildet wird durch vorheriges Aufbringen des Klebemittels auf eine erste Oberfläche der Formen oder einer Blindplatte entsprechend der zweiten Oberfläche des Kunststoffrahmens zum Kleben des Kunststoffrahmens an das Fensterglas beim Gießen des Kunststoffrahmens.

5. Verfahren zum Herstellen eines Fensterglases mit einem Kunststoffrahmen nach Anspruch 1 oder Anspruch 2, in dem das Verfahren zum Ausbilden des Kunststoffrahmens durch eine Extrusion gebildet wird; und der Kunststoffrahmen mit einem Klebemittel durch kontinuierliches Beschichten des Klebemittels auf einem Abschnitt des Kunststoffrahmens zum Kleben des Kunststoffrahmens an das Fensterglas gebildet wird, nachdem der Kunststoffrahmen von einem Stempel in eine bestimmte feste Form extrudiert wird und Luft oder Wasser gekühlt wird.

6. Verfahren zum Herstellen eines Fensterglases mit einem Kunststoffrahmen nach Anspruch 1 oder Anspruch 2, in dem das Klebemittel (11) ein lösungsmittelartiges Klebemittel der Urethanreihe ist.

7. Verfahren zum Herstellen eines Fensterglases mit einem Kunststoffrahmen nach Anspruch 1, in dem ein peripherer Abschnitt der Glasplatte, der mit einem Silanhaftvermittler und nachfolgend einem lösungsmittelartigen Klebemittel oder direkt mit dem lösungsmittelartigen Klebemittel, das den Silanhaftvermittler kontaktiert, beschichtet ist, in einen Nutabschnitt eines vorgeformten Kunststoffrahmens (4) zum Fixieren des Kunststoffrahmens an das Fensterglas (1) befestigt wird, und der Kunststoffrahmen an das Fensterglas durch Heizen des Kunststoffrahmens, während der Kunststoffrahmen eng das Fensterglas kontaktiert, oder durch enges Kontaktieren des Kunststoffrahmens an das Fensterglas, unmittelbar nachdem der Kunststoffrahmen erhitzt ist, geklebt wird.

8. Verfahren zum Herstellen eines Fensterglases mit einem Kunststoffrahmen nach Anspruch 1, worin, nachdem ein separat ausgebildeter Kunststoffrahmen (4) an die Peripherie des Fensterglases (1) fixiert wird, die mit einem lösungsmittelartigen Klebemittel beschichtet ist, das Kleben des synthetischen Kunststoffrahmens an das Fensterglas durch Heizen des lösungsmittelartigen Klebemittels durch Mikrowellenheizung durchgeführt wird, wodurch das Klebemittel aktiviert und dessen Härten beschleunigt wird.

## Revendications

1. Méthode pour fabriquer une vitre avec un châssis en résine synthétique, selon laquelle on fixe et on colle un châssis en résine synthétique préformé (4) à une partie périphérique de la vitre (1), intégrant ainsi le châssis en résine synthétique à la vitre, et qui consiste :
- à doter le châssis en résine synthétique (4) d'un agent adhésif (11), l'agent adhésif étant appliqué en couche sur une partie superficielle du châssis, lors du formage, afin de coller ledit châssis à la vitre (1),
- à fixer le châssis en résine synthétique (4) à la partie périphérique de la vitre (1), et
- à chauffer l'ensemble formé par le châssis en résine et la vitre dans un moule, ce qui provoque l'adhérence intégrale entre le châssis en résine synthétique (4) et la vitre (1) grâce à l'agent adhésif (11),
caractérisée en ce que le moule consiste en un outil de serrage (7) prévu pour le serrage, la compression et le chauffage d'au moins une partie de fixation du châssis en résine synthétique dudit ensemble.

2. Méthode pour fabriquer une vitre avec un châssis en résine synthétique, selon laquelle on fixe et on colle un châssis en résine synthétique préformé (4) à une partie périphérique de la vitre (1), intégrant ainsi le châssis en résine synthétique à la vitre, et qui consiste :
- à appliquer en couche un agent adhésif (11) sur une partie superficielle de la vitre (1) afin de coller le châssis en résine synthétique (4) à la vitre (1),
- à fixer le châssis en résine synthétique (4) à la partie périphérique de la vitre (1), et
- à chauffer l'ensemble formé par le châssis en résine et la vitre dans un moule, ce qui provoque l'adhérence intégrale entre le châssis en résine synthétique (4) et la vitre (1) grâce à l'agent adhésif (11),
caractérisée en ce que le moule consiste en un outil de serrage (7) prévu pour le serrage, la compression et le chauffage d'au moins une partie de fixation du châssis en résine synthétique dudit ensemble.

3. Méthode pour fabriquer une vitre (1) avec un châssis en résine synthétique selon la revendication 1, selon laquelle on place dans des moules une fausse vitre qui a la même forme que la vitre (1) à laquelle le châssis en résine synthétique (4) est fixé, au moins sur une partie périphérique de la fausse vitre ; on moule par injection une résine synthétique ou un matériau de base de celle-ci afin de former le châssis en résine synthétique ; une fois que la résine synthétique ou le matériau de base de celle-ci est solidifié, on enlève des moules la fausse vitre et le châssis en résine synthétique formé ; et on enlève le châssis en résine synthétique formé (4) de la fausse vitre.

4. Méthode pour fabriquer une vitre avec un châssis en résine synthétique selon la revendication 1, selon laquelle on forme le châssis en résine synthétique par moulage par injection ; et on dote le châssis en résine synthétique d'un agent adhésif en appliquant au préalable l'agent adhésif en couche sur une première surface des moules ou d'une fausse vitre qui correspond à une seconde surface du châssis en résine synthétique prévue pour l'adhérence entre ledit châssis et la vitre, lors du formage du châssis.

5. Méthode pour fabriquer une vitre avec un châssis en résine synthétique selon la revendication 1 ou 2, selon laquelle on forme le châssis en résine synthétique par extrusion ; et on dote le châssis en résine synthétique d'un agent adhésif en appliquant en continu l'agent adhésif en couche sur une partie dudit châssis qui est prévue pour l'adhérence entre le châssis et la vitre, après avoir donné une certaine forme fixe au châssis à l'aide d'une matrice à extrusion, puis on procède au refroidissement par air ou par eau.

6. Méthode pour fabriquer une vitre avec un châssis en résine synthétique selon la revendication 1 ou 2, selon laquelle l'agent adhésif (11) est un agent adhésif de la famille de l'uréthanne du type solution.

7. Méthode pour fabriquer une vitre avec un châssis en résine synthétique selon la revendication 1, selon laquelle une partie périphérique de la plaque de verre revêtue d'un agent de couplage constitué par un silane puis d'un agent adhésif du type solution, ou directement de l'agent adhésif du type solution en contact avec l'agent de couplage constitué par un silane, est fixée à une partie de rainure d'un châssis en résine synthétique préformé (4) destinée à la fixation entre ledit châssis et la vitre (1), et on colle le châssis en résine synthétique à la vitre en le chauffant alors qu'il est en contact étroit avec la vitre, ou en le mettant étroitement en contact avec la vitre juste après l'avoir chauffé.

8. Méthode pour fabriquer une vitre avec un châssis en résine synthétique selon la revendication 1, selon laquelle, après avoir fixé un châssis en résine synthétique (4), formé séparément, à la périphérie de la vitre (1) revêtue d'un agent adhésif du type solution, on procède au collage du châssis à la vitre en chauffant l'agent adhésif du type solution à l'aide d'un dispositif à micro-ondes, ce qui active l'agent adhésif et accélère son durcissement.
